(19) Europäisches Patentamt
European Patent Office
Office européen des brevets

(11) **EP 2 233 205 B1**

(12) **EUROPEAN PATENT SPECIFICATION**

(45) Date of publication and mention of the grant of the patent:
**07.05.2014 Bulletin 2014/19**

(51) Int Cl.:
***B01J 20/32*** *(2006.01)* ***G01N 1/40*** *(2006.01)*

(21) Application number: **10157627.0**

(22) Date of filing: **24.03.2010**

(54) **Flavor extracting device for isolation or analysis of volatile compounds**

Geschmacksextraktionsvorrichtung zur Isolation oder Analyse flüchtiger Verbindungen

Dispositif d'extraction d'aromes pour l'isolation ou l'analyse de composants volatiles

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.03.2009 EP 09156068**

(43) Date of publication of application:
**29.09.2010 Bulletin 2010/39**

(73) Proprietor: **Symrise AG**
**37603 Holzminden (DE)**

(72) Inventors:

- **Brennecke, Stefan**
  **37620, Halle (DE)**
- **Degenhardt, Andreas**
  **37603 Holzminden (DE)**
- **Weber, Berthold**
  **37671, Höxter (DE)**
- **Kohlenberg, Birgit**
  **37619, Pegestorf (DE)**
- **Krammer, Gerhard**
  **37603, Holzminden (DE)**

(74) Representative: **Eisenführ Speiser**
**Patentanwälte Rechtsanwälte PartGmbB**
**Postfach 10 60 78**
**28060 Bremen (DE)**

(56) References cited:
**WO-A1-99/64480** **WO-A1-2005/024389**
**CN-A- 101 362 075** **US-A1- 2001 045 000**
**US-A1- 2006 247 361**

- **HUANG X; QIU N; YUAN D; HUANG B: "A novel stir bar sorptive extraction coating based on monolithic material for apolar, polar organic compounds and heavy metal ions", TALANTA, ELSEVIER, AMSTERDAM, NL, vol. 78, no. 1, 11 November 2008 (2008-11-11), pages 101-106, XP025896515, ISSN: 0039-9140**
- **KETOLA R A; KIURU J T; TARKIAINEN V; KOKKONEN J T; RASANEN J; KOTIAHO T: "Detection of volatile organic compounds by temperature-programmed desorption combined with mass spectrometry and Fourier transform infrared spectroscopy", ANALYTICA CHIMICA ACTA, ELSEVIER, AMSTERDAM, NL, vol. 562, no. 2, 15 March 2006 (2006-03-15), pages 245-251, XP025047172, ISSN: 0003-2670**
- **CAMEL V; CAUDE M: "Trace enrichment methods for the determination of organic pollutants in ambient air", JOURNAL OF CHROMATOGRAPHY, ELSEVIER SCIENCE PUBLISHERS B.V. AMSTERDAM, NL, vol. 710, no. 1, 25 August 1995 (1995-08-25), pages 3-19, XP004038699, ISSN: 0021-9673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 233 205 B1

## Description

The present invention relates to a solid phase extraction body (flavor extracting device), methods for its manufacture, uses of such extraction body and analytical methods involving such extraction body.

The analysis of volatile compounds which impart flavor notes to foods is an analytical challenge. The sample preparation, i.e. the isolation of the volatile fraction prior to analysis by gas chromatography (GC), is often tedious and matrix components are not always completely separated. Therefore, analytical laboratories strive for methods which involve as little handling as possible, allow automation and are amenable to a wide range of foods, extracts, flavors, fragrances and synthetic reaction mixtures. Especially fat containing food matrices pose difficulties because fat is co-extracted and introduced into the gas chromatograph. In addition, flavor molecules are frequently lipophilic species and their affinity to fat matrix is high. Taken all together, analytical laboratories and food, flavor or fragrance companies have the need and desire to establish methods which fulfill the following criteria: simple and easy handling, amenable for routine analysis, good extraction of flavor molecules representing a wide polarity range, and, in so far as the method involves sorbent materials, a high capacity (i.e. loading of molecules onto the sorbent material), tolerance to fat containing matrices, tolerance to high sugar content, low or no influence of water content, easy adaptation to gas chromatography, and preferably preparative capabilities.

Baltussen, E.; Cramers, C. A.; Sandra, P. J. F. state in Analytical and Bioanalytical Chemistry 2002, 373(1-2), 3-22 that, although good performance can be obtained for many practical problems, in some cases the applicability of adsorptive sample preparation falls short, particularly for the enrichment of polar and/or high-molecular weight compounds, especially in combination with thermal desorption. This underlines the need for a material for extraction of universal flavor compounds from complex matrices.

The combination of solid phase extraction and thermodesorption is described in the following literature: Polydimethylsiloxane rod extraction, a novel technique for the determination of organic micropollutants in water samples by thermal desorption-capillary gas chromatography-mass spectrometry. Montero, L.; Popp, P.; Paschke, A.; Pawliszyn, J. Journal of Chromatography, A 2004, 1025(1), 17-26; Development of a novel solid-phase extraction element for thermal desorption gas chromatography analysis. Wang, Lili; Hosaka, Akihiko; Watanabe, Chuichi; Ohtani, Hajime; Tsuge, Shin. Journal of Chromatography A 2004, 1035(2), 277-279; Simultaneous determination of preservatives in soft drinks, yogurts and sauces by a novel solid-phase extraction element and thermal desorption-gas chromatography. Wang, Lili; Zhang, Xiao; Wang, Yiping; Wang, Wei. Analytica Chimica Acta 2006, 577(1), 62-67. None of the above references provides a satisfactory solution which fulfils all requirements needed for a gentle analysis of flavor molecules.

Furthermore, a possible solution to satisfy the above needs is discussed in WO 91/15745. A glass fibre is loaded with an adsorbing material and attached to a metal stick and covered by an outer coating. For analysis, the fibre is liberated from the outer coating and brought into contact with the flavour molecules. The glass fibre is then thermally desorbed in specially designed GC inlets. This approach is accompanied by inherent disadvantages: the glass fibre has limited capacity and the polarity and the physical characteristics of the adsorbent material have to be carefully chosen in order to assure complete adsorption of the molecules of interest. In addition, the use of such techniques is not feasible for fat containing matrices since fat is readily adsorbed onto the fibre and cannot be manually removed by stripping of the fibre.

Another possible solution is discussed by EP 1 039 288. Here, a magnetic stir bar is coated with adsorbing material. The bar is then contacted with the liquid sample and agitated by a magnetic stirrer. During stirring, the flavor molecules in the liquid sample are being adsorbed by the material. In commercially available GC inlets, the thermal desorption of such stir bars is performed. The disadvantages of such an approach are: limited capacity and non-suitability for fat containing matrices. Also, the range of flavor molecules captured by the technique is rather limited, because only one universal adsorbent material with rather unpolar characteristics is commercially available. In many cases, the use of such material for the extraction of flavor molecules from fat containing matrices, is accompanied by low reproducibility between different measurements, because fat is easily adsorbed onto the surface and interferes with the measurement.

DE 10 2004 006 856 A1 discusses devices which contain a two-layer system of adsorbing materials. These devices are said to extract a broad spectrum of potential analytes and offer better performance for quantitative analysis. This application reports the use of polymethylsiloxanes and active carbon used in combination, but also states that losses of very volatile compounds could occur. In addition, the irreversible absorption of low volatile molecules is also reported.

WO 99/64480 A1 discusses an ion exchange porous resin for solid phase extraction and chromatography. Disclosed therein are porous resin compounds for solid phase extraction, and methods of manufacture of such compounds. Resins as described by this document are frequently used for solid phase extraction of analytes. However, flavour analysis frequently requires extraction of analytes (flavour substances) from complex matrices, which can distort or even impede such extraction, giving rise to the problems discussed above. In particular, such complex matrices, like chocolate and milk, can comprise lipids and other hydrophobic substances which can significantly reduce the amount of analytes that may be bound by a solid phase extraction body. Thus, such matrices are usually considered difficult to

handle.

US 2006/0247361 discloses a substrate modified by a polar functionalized polymer for solid phase extraction. The polymer includes copolymers formed from hydrophobic monomers such as styrene or divinylbenzene and hydrophilic monomers such as vinylpyrrolidone , acrylamide further modified with a sulfonate.

KETOLA R A; "Detection of volatile organic compounds by temperature-programmed desorption combined with mass spectrometry and Fourier transform infrared spectroscopy", ANALYTICA CHIMICA ACTA, ELSEVIER, AMSTERDAM, NL, vol. 562, no. 2, 15 March 2006, pages 245-251, XP025047172 discloses a mixture of a poly(oxy[1,1':3',1"-terphenyl]-2',5'-diyl), with a divinylbenzene polymer used as sorbent material packed in a tube for analyzing polar and non-polar volatile organic compounds.

It was thus the problem of the present invention to provide a method for extracting analytes, particularly flavour and fragrance substances, for analysis of a composition comprising such analytes. The method should allow to reduce the errors in extraction of flavour and fragrance substances from complex matrices. According to a further aspect, the invention should provide extracts useful in such methods of the present invention. In addition, the invention should provide a method of quantitative or qualitative analysis of complex matrices comprising an analyte, particularly a flavour or fragrance substance.

In a first aspect of the present invention, there is provided a method of producing a solid phase extraction body, comprising the steps:

a) forming a mixture comprising

(i) bringing an aromatic polyether into solution in a solvent and

(ii) suspending a resin in said solvent before, during or after step (a)-(i), wherein the resin is of the formula

$$-(A)_n-(B)_m-(C)_p-$$

and salts thereof, wherein the order of (A), (B) and (C) may be random, block, or a combination of random and block; wherein

$$\frac{1}{100} < \frac{(p+n)}{m} < \frac{100}{1}$$

and

$$\frac{1}{500} < \frac{p}{n} < \frac{100}{1}$$

wherein (A) is selected from the group consisting of

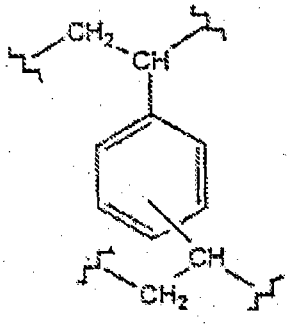

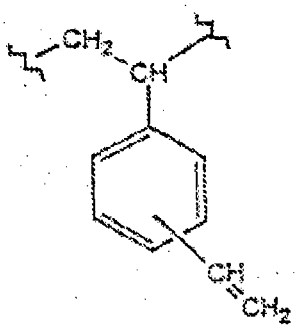

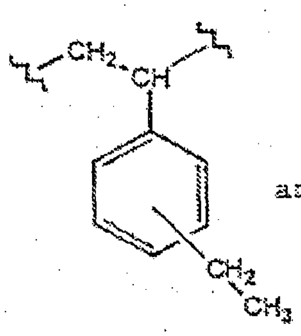

and

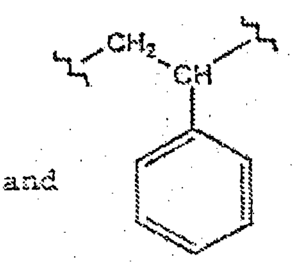

wherein (B) is selected from the group consisting of

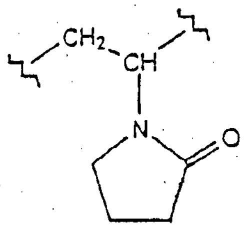 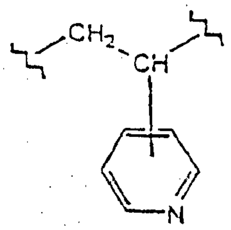 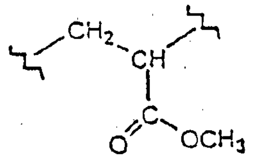 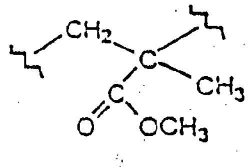

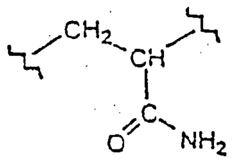 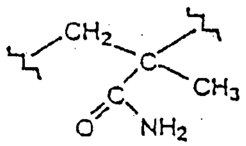 and 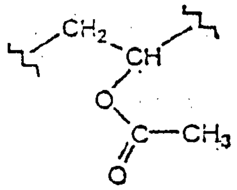

and wherein C is modified A, wherein modified A is selected from the group consisting of

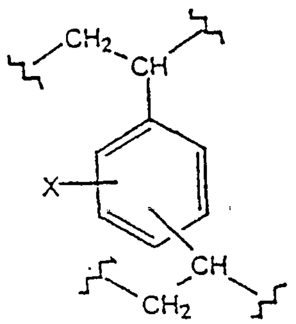 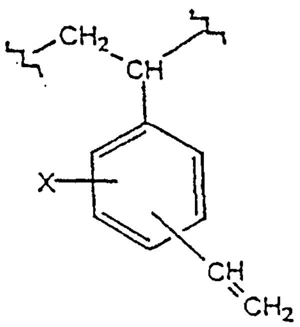 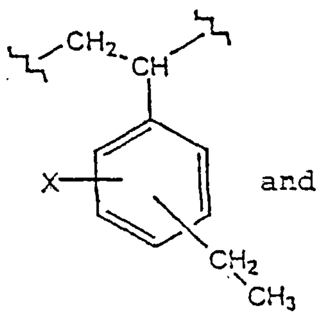 and 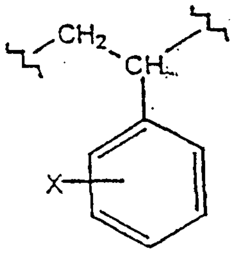

and wherein wherein X is selected from the group consisting of $SO_3H$, $CH_2CO_2H$, $CH_2CH(CO_2H)_2$, $CO_2H$, $PO_3H_2$, $PO_2H_2$, $CH_2PO_3H_2$, $CH_2Cl$, $CH_2NH_2$, $CH_2N[(CH_2)_yCH_3]_2$ wherein y is any integer from 0 to 18, $CH_2N^+[(CH_2)_yCH_3]_3D^-$ wherein y is any integer from 0 to 18 and D is an anion, $SO_2NHR$ wherein R is polyethylenimine, and $CH_2NHR$ wherein R is polyethylenimine,

b) forming a solid phase extraction body using the mixture of step a), preferably by coating and drying a carrier body with the mixture to form a solid phase extraction layer on the carrier body.

Such resins, their respective manufacture and preferred embodiments thereof are described in WO 99/64480 A1.

Thus, solid phase extraction bodies devoid of modified A are not according to this invention.

Surprisingly, solid phase extraction bodies produced by this method are remarkably less prone to influences of complex matrices and particularly lipids. It was advantageously found that analytes, particularly flavor and fragrance substances, bound to such solid phase extraction bodies can be desorbed thermally for detection and/or quantification, e.g. by gas chromatography, thereby significantly increasing sensitivity of such analyses, i.e. detection and/or quantification. Further, it was surprisingly found that the solid phase extraction bodies of the present invention are particularly suitable for extracting of polar aroma substances in food matrices, especially in fat-containing foods.

Thus, according to a further aspect, the invention provides a solid phase extraction body having the properties of a body produced according to the above manufacturing method of the present invention and/or its preferred method embodiments. In other words: The present invention provides solid phase extraction bodies obtained or obtainable by such manufacturing method of the present invention.

And according to a further aspect, the present invention provides methods for analytically determining the presence of and/or the isolation of an analyte, preferably a flavor or fragrance substance, in a medium, comprising the steps of

a) contacting a medium comprising the analyte with a solid phase extraction body according to the present invention to allow sorption of the analyte to said solid phase extraction body,

b) desorbing the analyte from said solid phase extraction body,

c) detecting or recovering the desorbed analyte.

In the context of the present invention, flavor substances are considered to belong to a wide range of chemical classes. An overview about the potential compounds extracted and valued by the flavor and fragrance industry or by the consumer of any food product is given by food chemistry text books, e.g. Belitz, Grosch, Lehrbuch der Lebensmittelchemie, Springer, Berlin, 1992. The following table gives some examples of flavor compounds which are considered as "character impact compounds" in foods or flavors.

| Compound | Flavor | Occurrence |
|---|---|---|
| 2-trans,4-cis-Decadienoic acid ethylester | Pear-like | Pear |
| Benzaldehyde | Bitter almond-like | Almonds, cherries, plums |
| Neral/geranial | Lemon-like | Lemon |
| 1-(p-Hydrohyphenyl)-3-butanone | Raspberry-like | Raspberries |
| (R)-(-)-1-Octen-3-ole | Mushroom-like | Champignons, Camembert-cheese |
| 2-trans,6-cis-Nonadienal | Cucumber-like | Cucumber |
| Geosmine | Earthy | Red beet roots |
| Trans-5-methyl-2-hepten-4-one | Nutty | Hazelnut |
| 4-Hydrohy-2,5-dimethyl-3(2H)-furanone | Caramel-like | Cookies, beer, coffee |
| 2-Acetyl-1-pyrroline | Roasty | Bread crust |

Flavor substances defined in the context of the present invention are preferably part of the following chemical classes: aldehydes, pyranones, furanones, thiols, thioether, di- and trisulphides, thiophenes, thiazoles, pyrroles, pyridines, pyrazines, phenols, alcohols, fatty acids, hydrocarbons, organic acids, terpenes and lactones. The flavor extracting device is especially useful for the extraction of polar aroma compounds such as 4-Hydrohy-2,5-dimethyl-3(2H)-furanone from complex food matrices with a high fat content.

Polar flavor compounds are defined by a difference in retention indeces (RI) based on two different GC columns with polar and unpolar characteristics. The delta RI (DB Wax - DB-1) for the polar flavor compounds is >600. Examples for such compounds are vanillin, 4-Hydrohy-2,5-dimethyl-3(2H)-furanone, gamma- and delta-hexadecalactone, palmitic acid, methyl butyric acids, vinyl guaiacol, maltol, sotolone, gamma- and delta-tetradecalactone, acetic acid, etc. Further such compounds are listed in Table 11.

Many flavor substances are volatile compounds, as is apparent e.g. for flavors in wine and coffee. It is thus frequently considered to transfer flavor compounds into a gas phase and analyse this flavor-enriched gas phase ("headspace analysis"). However, according to the invention it is found possible and advantageous to extract analytes, particularly flavor substances, directly from a respective liquid or viscous matrix without prior volatilization.

Turning now to the manufacturing method of the present invention, it is observed that it is in principle possible to produce a solid phase extraction body without coating and drying the mixture of step (a) on a carrier body, e.g. to produce solid phase extraction bodies in the form of beads, fibres, tubes, membranes or sheets. Such materials may be used, e.g. for the production of extraction cartridges, as described in e.g. US 5,976,367. However, such cartridges tend to become blocked by viscous or lipid-rich media, thereby frequently reducing the sorptive capacity and the amount of extracted analyte(s). In such cases, it is sometimes useful to heat the medium to be extracted such as to reduce its viscosity. However, such a heating steps does not appear to be beneficial to the flavor compounds since heat degradation may occur.

This being said, according to the invention it is preferred that in step (b) a carrier body is coated and dried with the mixture of step (a) to form a solid phase extraction layer on the carrier body. Such carrier bodies are easier to handle than small beads, tubes, fibres, sheets or membranes of extraction cartridges. It is particularly preferred to use a magnetic carrier body in the manufacturing method of the present invention. This way, recovery of the coated solid phase extraction body from a medium is greatly simplified since the solid phase extraction body can be lifted from the medium without or

with few contact to further bodies that might influence the analytes attached to the solid phase extraction body. Lifting of the solid phase extraction body can be achieved simply by application of a magnetic field, e.g. by introducing a magnet or magnetic stick into the medium. Magnetic solid phase extraction bodies therefore obviate the need to apply complex means of recovery of these bodies, e.g. sieving or centrifuging a medium to separate the solid phase extraction bodies therefrom. Further, magnetic solid phase extraction bodies can be agitated in a medium by application of a rotating magnetic field, e.g. by a magnetic stirrer. This is a particular advantage, since agitation of the medium forces the solid phase extraction body into close and intimate contact not only with its immediately adjacent medium as in a non-agitated medium, but also thoroughly mixes the medium to bring other parts of the medium volume into contact with the solid phase extraction bodies surface. By assuring an intimate contact of the solid phase extraction body with a large fraction of media volume, it is easy to achieve equilibrium between sorption and desorbtion of analytes to the solid phase extraction body, thereby improving reproducibility of analytical results.

Preferably, the aromatic polyether is poly(oxy[1,1':3',1"-terphenyl]-2', 5'-diyl)-. Such aromatic polyether is sold under the trade name "Tenax" by Sigma-Aldrich. A particularly preferred aromatic polyether is sold under the product name "Tenax TA". "Tenax" aromatic polyether aid in improving the sorptive capacity of the solid phase extraction body of the present invention. "Tenax" aromatic polyethers advantageously allow to securely fix the resin of step (a-ii) on a carrier body. Also, employing a "Tenax" aromatic polyether in the manufacturing method of the present invention advantageously results in the production of a robust and firm coating on carrier bodies that do not disintegrate or separate from their respective carrier body even during long agitation of complex media. It had been particularly difficult to achieve a fast and secure attachment of the resin on a carrier body, particularly a carrier body with a glass surface. Thus, a method of producing a solid phase extraction body according to the present invention is particularly preferred when it comprises the steps:

a) Forming a mixture, comprising

(i) Dissolving poly(oxy[1,1':3',1"-terphenyl]-2', 5'-diyl)- in a solvent and

(ii) suspending a resin in said solvent before, during or after step (a)-(i), wherein the resin is of the formula

$$-(A)_n-(B)_m-(C)_p-$$

and salts thereof, wherein the order of (A), (B) and (C) may be random, block, or a combination of random and block; wherein

$$\frac{1}{100} < \frac{(p+n)}{m} < \frac{100}{1}$$

and

$$\frac{1}{500} < \frac{p}{n} < \frac{100}{1}$$

wherein (A) is selected from the group consisting of

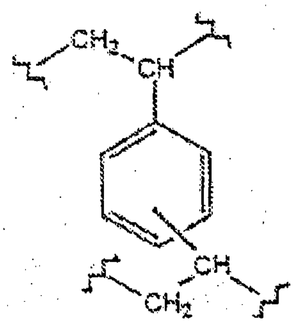
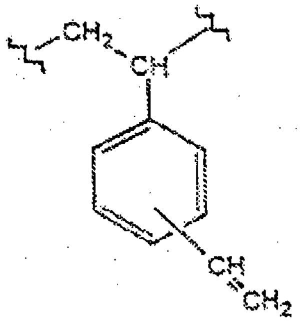
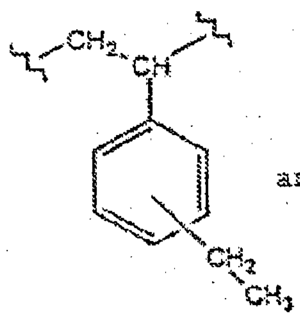
and
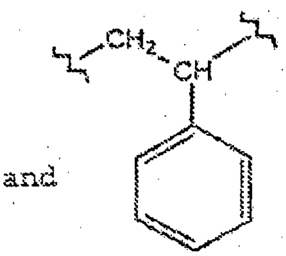

wherein (B) is selected from the group consisting of

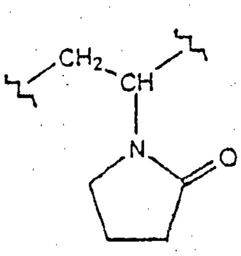
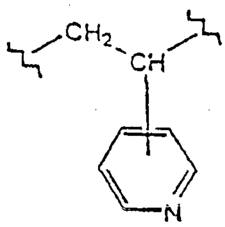
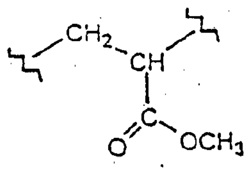
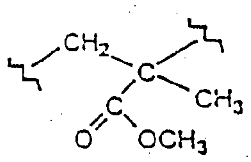

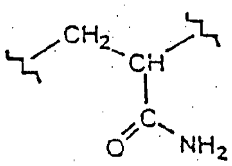
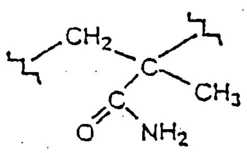
and
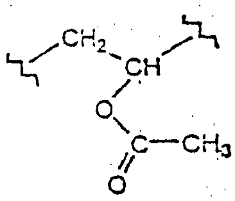

and wherein C is modified A, wherein modified A is selected from the group consisting of

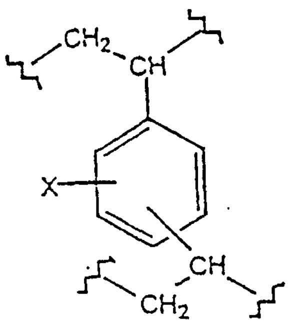
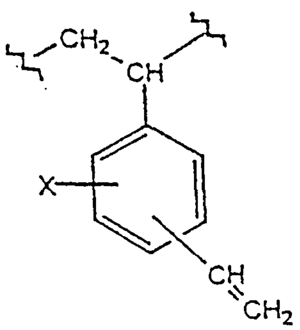
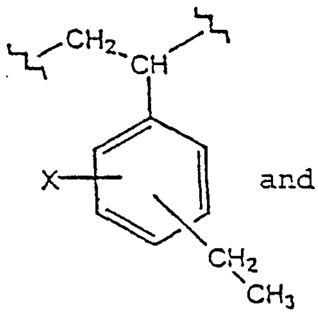
and
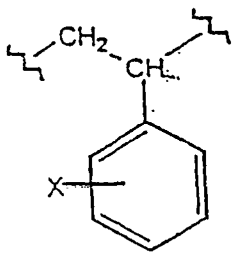

and wherein wherein X is selected from the group consisting of $SO_3H$, $CH_2CO_2H$, $CH_2CH(CO_2H)_2$, $CO_2H$, $PO_3H_2$, $PO_2H_2$, $CH_2PO_3H_2$, $CH_2Cl$, $CH_2NH_2$, $CH_2N[(CH_2)_yCH_3]_2$ wherein y is any integer from 0 to 18, $CH_2N^+[(CH_2)_yCH_3]_3D^-$ wherein y is any integer from 0 to 18 and D is an anion, $SO_2NHR$ wherein R is polyethylenimine, and $CH_2NHR$ wherein R is polyethylenimine,

b) forming a solid phase extraction body using the mixture of step a), preferably by coating and drying a carrier body

with the mixture to form a solid phase extraction layer on the carrier body.

Also for the reasons described above, solid phase extraction bodies obtained or obtainable by such method are preferred.

The solvent of the manufacturing method of the present invention preferably is chloroform, dichloromethane or a mixture of these. It has been found that such solvents dissolve the aromatic polyether and particularly the "Tenax" polyether particularly well. Further, the solvents can be easily evaporated after bringing a carrier body into contact with the mixture of step (a). This greatly expedites the coating process. In case the coating process is repeated, it is possible to have a very short time of drying to achieve a coating of the solid phase extraction body.

In the manufacturing method of the present invention, the resin preferably is one of the resins that according to WO 99/64480 A1 are considered preferred, with the restrictions in view of the mandatory presence of modified A as defined above. Particularly preferred resins are therefore copolymers of divinylbenzene and N-vinylpyrrolidone further comprising the modifications of "modified A" as defined above, preferably selected from sulfonic groups, carboxylic acid groups and tertiary amino groups. For obtaining the resin , copolymers of divinylbenzene and N-vinylpyrrolidone can be subjected to a sulfonation reaction so as to form a sulfonated copolymer comprising at least one ion-exchange functional group, at least one hydrophilic component and at least one hydrophobic component. Most preferred are tertiary alkylamino and chloromethyl groups. Such resin comprises both polar and unpolar functional groups, which aid in extraction of a wide range of flavour and fragrance analytes. It was surprisingly found that solid phase extraction bodies comprising the preferred or even the most preferred modified A groups extract polar flavour compounds with higher selectivity and sensitivity than corresponding bodies without modified A groups, even if the extracted compounds do not comprise ionisable groups.

The resin may thus be modified by the introduction of charged substituents such as tertiary alkylamino and chloromethyl groups commonly, preferably such as used in the production of weak anion exchangers. The use of bonded groups such as those used in the manufacture of strong anion exchangers is also an alternative way in the production of the flavor extracting device. Depending on the chemical nature of the target analytes, the use of cation exchange material with bonded groups such as bonded sulfonic acid groups or carboxylic acid groups is another embodiment of the present invention. If the chemical target, i.e. the analyte of interest, contains ionisable groups such as carboxyl groups as in case of volatile and semi-volatile organic acids, the introduction of charged substituents into the flavor extracting device is highly desired. The chemical nature of the polymer material used is chosen in a way that the polymer exhibits hydrophilic as well as lipophilic properties. To achieve this, other types than copolymers of divinylbenzene and N-vinylpyrrolidone further comprising modified A may be used and are also an embodiment of the present invention.

Suitable carrier bodies in the manufacturing method of the present invention preferably are metal or alloy bodies, glass bodies or plastic bodies. Further preferably the carrier bodies comprise a core of a magnetic material, preferably iron or a magnetic alloy, and a glass, plastic or metal, preferably titanium, coating. As indicated above, the carrier body is not limited to a body in stick shape. However, such shapes are preferred, as they fit into commercial devices for thermodesorption, e.g. thermodesorption units TDS or TDU manufactured by GERSTEL, Mülheim/Ruhr, Germany. Where the carrier body is magnetic, it is further preferred that the carrier body has a shape resembling that of a magnetic stirrer bar.

The solid phase extraction body preferably has the shape of a stick or magnetic stirrer bar. Also, the solid phase extraction body preferably has the dimensions of a magnetic stirrer bar of preferably cylindrical shape with a length of 10-100 mm, preferably 15-80 mm, and preferably 50-80 mm, and a width of 1-25 mm, preferably 1-4 mm, most preferably 3 mm.

According to the manufacturing method of the present invention, it is particularly preferred when the carrier body made of boro silicate glass used in step (b) has a roughness as of glass "sand-blasted" with corundum of 60 to 120 $\mu$m particle size at a blasting pressure of 3 bar and an angle of impact of 45°. Such treatment with corundum particles results in a surface roughness of a glass surface which particularly aides in forming a robust and tight coating in step (b). The robustness of coating in step (b) is significantly increased when a carrier body is used having a roughness obtainable as just described above. It is a particular advantage that using such rough carrier bodies in a manufacturing method of the present invention employing a "Tenax" aromatic polyether and a divinylbenzene and N-vinylpyrrolidone copolymer resin with weak anion exchange groups, i.e. modified A results in a solid phase extraction body having a very long lasting, resilient and enduring attachment of its coating to the carrier body. The solid phase extraction layer on the carrier body preferably has an average thickness of at least 5 $\mu$m, preferably in the range of 5 to 500 $\mu$m. A solid phase extraction body for analytical purposes preferably has a solid phase extraction layer with an average thickness of 30 - 40 $\mu$m. Such solid phase extraction layer can be easily produced by repeating step (b), such that the coating is performed 2-10 times, preferably 3-5 times. A drying period is inserted between each coating step. As the amount of flavor and fragrance substances that can be bound to the solid phase extraction layer increases with thickness of this layer it is preferred for preparative purposes or for trace analysis purposes to produce a solid phase extraction body with the method of the present invention having an average solid phase extraction layer thickness of

a) For flavor analysis: 5-80 μm, preferably 20-50 μm, most preferred 30-40 μm;

b) For preparative purposes: at least 40 μm, preferably 40-500 μm;

c) For trace analysis: 20-80 μm, preferably 30-60 μm, most preferred about 50 μm.

The skilled artisan is guided by the intention to select the thickness of the solid phase extraction layer according to his specific analytical task. He will consider that if the layer thickness is chosen too high, the amount of analytes and particularly of flavor molecules introduced into an analyzer, particularly a GC device, can be too high and overloading may occur. On the other hand, if the layer thickness is chosen too low, not enough analytes (particularly flavor substances) may be extracted from the medium, thus rendering the sensitivity of the analysis method of the invention not satisfactory.

The coating of the carrier body may be done by submersing the carrier body into the solution of step (a). However, other ways to coat the carrier body are also embodiments of the present invention, for example spraying or precipitation of the solution of step (a) unto the carrier body.

The solid phase extraction layer is preferably dried at temperatures of 20 to 300°C. The drying is preferably done with a stream of air or more preferably with a stream of an inert gas such as nitrogen.

In the analytical method according to the invention, the presence or amount of an analyte, preferably a flavor or fragrance substance, is detected or measured. Likewise, the analytical method of the present invention is useful for extracting or isolating an analyte, again preferably a flavor or fragrance substance, from a medium.

Typical media for the analytical method of the present invention are selected from the group consisting of flavor and/or fragrance mixtures foodse.g. whole dishes such as soup or meat with potato salad], food extracts, preferably beverages (chocolate, milk, coffee fruit juices, soy), culinary preparations (meat fonds, soups, meat extracts), soy, fat-containing foods or food extracts (chocolate, nougat, coffee soy, milk, cream, meat extracts, soups, fonds, vegetable and dairy fats, ice cream), fruit products (preferably fruit pulps, fruit purees or fruit juices), candies, chewing gum, toothpastes, flavors, perfumes, botanical extracts, carbonated and non-carbonated beverages, with or without alcohol (fruit juice, lemonade, beer, wine, spirits), fat-containing foods or food extracts, cloudy foods (fruit juices, meat fonds), extracts of any kind, biological samples (i.e. saliva, sweat, etc.), synthesis products, intermediate products from production plants (dairy mixes, chocolate pre-mixes, etc.). The media have a fat content of 0.45 to 99.9 wt% (dry weight), preferred 3 to 99.9 wt% (dry weight), more preferred 10 to 99.9 wt% (dry weight), even more preferred 30 to 99.9 wt% (dry weight), even more most preferred 50 to 99.9 wt% (dry weight), most preferred 70 to 99.9 wt% (dry weight) of $C_{10}$-$C_{24}$ saturated and unsaturated fatty acids.

The contacting time of step (a) of the analytical method of the present invention (sampling period, also called extraction time) is generally adjusted to the flavor content of the sample. Typical sampling periods range from 1 min to 24 h, preferred are sampling periods from 30 to 75 min most preferably 60 min.

Prior to step (b), the solid phase extraction body is removed from the medium. At this stage, the solid phase extraction body can be cleaned from adherent medium, e.g. by light cleaning with a paper, cloth or tissue. This is particularly useful to remove sticky medium contents like cocoa particles, fat or juice particles.

In step (b), the analyte is desorbed from the solid phase extraction body. Desorption is preferably performed by thermal desorption, most preferably by heating from 20 °C to 270°C, most preferably at 100-230°C. It has surprisingly been found that even upon gentle heating, analytes attached to the solid phase extraction body readily desorb and are detectable in step (c), e.g. by gas chromatography. Thus, even for analytes like flavor substances that are susceptible to disintegration at elevated temperatures, e.g. many sulfur containing aroma chemicals or aldehydes, analysis is possible according to the present invention.

In step (c), the desorbed analyte is (i) recovered or (ii) detected. Recovery of the desorbed analyte is useful for preparative extraction of analytes from a medium. Recovery is done by freezing out, e.g. in liquid nitrogen. Detection is preferably performed by gas chromatography with conventional detectors such as flame ionization detection or mass selective detection.

The invention is further described by reference to the attached examples. It is to be noted that the examples are not intended in any way to limit the scope of the claims.

<u>Examples:</u>

1. <u>Manufacture of a solid phase extraction body (FED 1) not according to the invention</u>

A solid phase extraction body was made according to the following process: 200mg of Tenax® TA 35-60 Mesh as well as 200mg of a copolymer of divinylbenzene and N-vinylpyrrolidone (for this example the commercially available Oasis HLB material made by Waters Corporation, Milford, MA, USA, with a particle size of 30μm) were filled into a 20 ml vial and suspended in 10 ml of chloroform in an ultrasonic bath. The suspension was then transferred into a small

glass tube with the dimensions of (12*90 mm) with a magnetic stir bar on the bottom. The glass stick (boro silicate glass) of the dimension 8 cm long with a diameter of 3 mm was submersed into the liquid. This coating procedure was repeated three times. Between each submersion of the glass stick the stick was dried in the air at room temperature. At the end of the coating process, the stick was dried in a stream of nitrogen gas. Prior to the first use, the flavor extracting device was heated for 1 h to 240°C to remove potentially unwanted compounds.

2. Manufacture of a solid phase extraction body (FED 2)

A further solid phase extraction body was made according to the following process: 200mg of Tenax® TA 35-60 Mesh as well as 200 mg of a copolymer of divinylbenzene and N-vinylpyrrolidone with bonded tertiary alkylamino groups (for example the commercially available Oasis HLB WAX material made by Waters Corporation, Milford, MA, USA, with a particle size of 30 μm) were filled into a 20 ml vial and suspended in 10 ml of chloroform in an ultrasonic bath. The suspension was then transferred into a small glass tube with the dimensions of (12*90 mm) with a magnetic stir bar on the bottom. The glass stick (boro silicate glass) of the dimension 8 cm long with a diameter of 3 mm was submersed into the liquid. This coating procedure was repeated three times. Between each submersion of the glass stick the stick was dried in the air at room temperature. At the end of the coating process, the stick was dried in a stream of nitrogen gas. Prior to the first use, the flavor extracting device was heated for 1 h to 240°C to remove potentially unwanted compounds.

Manufacture of a solid phase extraction body (FED 3) not according to the invention

A magnetic stir was coated with a glass layer. A suspension was applied to the bar according to examples 1 and 2 as follows: 200 mg of Tenax® TA 35-60 Mesh as well as 200 mg of a copolymer of divinylbenzene and N-vinylpyrrolidone (for example the commercially available Oasis HLB material made by Waters Corporation, Milford, MA, USA, with a particle size of 30 μm) were filled into a 20ml vial and suspended in 10ml of chloroform in an ultrasonic bath. The suspension was then transferred into small glass tube with the dimensions of (12*90 mm) with a magnetic stir bar on the bottom. The glass-coated stir bar of the dimension 15 mm long with a diameter of 3 mm was submersed into the liquid by holding with a fine forceps. This coating procedure was repeated three times. Between each submersion of the glass stick the stick was dried in the air at room temperature. At the end of the coating process, the stick was dried in a stream of nitrogen gas. Prior to the first use, the flavor extracting device was heated for 1h to 240°C to remove potentially unwanted compounds.

3. Milk flavor extraction

A typical sample preparation with a solid phase extraction body is performed in the following way. Milk flavor is an analytical challenge, because the contents of volatile compounds are very low. Milk flavor is also very sensitive to heat impact. Heating of milk samples during sample preparation for flavor analysis is the leading cause for degradation of labile compounds and the formation of off-notes, i.e. cooked notes. The sample preparation for milk requires high enrichment of flavor compounds to achieve satisfactory detection as well as gentle processing to avoid artefact formation.

A milk sample of 25 mL, 3.5% fat content, was placed into a closed container such as a vial, the solid phase extraction body FED1 or FED2 was introduced into the liquid. The liquid was then stirred for 1 h sampling time. After this time, the solid phase extraction body was removed from the liquid, was rinsed with water and cleaned with a piece of tissue and dried in the air at room temperature. Flavor compounds were then desorbed by thermodesorption and analysed by gas chromatography with a mass selective detector. The instrument used was: GC/MS: Agilent 6890 plus (Waldbronn, Germany), MSD 5973N, enhanced chemstation MSD D.03.00.611, TDS A: Gerstel (Mühlheim an der Ruhr, Germany), Maestro Vers. 1.2.5.23/3.2, conditions: TDS: 20°C ramped 60°/minute, end temperature 230°C, hold time 5 minutes, splitless mode, CIS4: - 150°C ramped 12°/sec, end temperature 230°C, hold time 5 minutes, splitless (solvent venting) 5 minutes, vent. flow 40ml/min, column: ZB-Wax+ (Phenomenex, Aschaffenburg, Germany), 60m length, 0.32mm i.D., 0,25μm film thickness, run conditions: 40°C hold for 2 minutes, ramped 4°/minute, end temperature 240°C, const. flow 2.2ml/minute, splitless mode; MS: mass range: m/z 25 - 400, ion source: 230°C, quadrupole: 150°C, EI energy: 70 eV.

For comparison, sample preparation was done with a commercially available Twister® stir bar (SBSE, stir bar sorptive extraction) manufactured by Gerstel (Mühlheim an der Ruhr, Germany) with the same analytical conditions as described above. The results obtained by both methods are compared. To better allow comparison, an internal standard of 2-nonanol was spiked into the milk sample. This offers the possibility to refer the results to the internal standard. However, in order to assess the capacity of the flavor extracting device in comparison to the Twister® technique, areas from the respective compounds peaks of the gas chromatogram were compared and illustrated in Table 1. It can be seen that the peak areas for the solid phase extraction body according to the invention are higher than those of the

Twister® sample (Table 1). The solid phase extraction bodies according to the present invention extract a wide polarity range of lactones ranging from butyrolactone up to delta-dodecalactone.

Table 1: Milk sample: Area comparison of a solid phase extraction body (FED 2) with Twister® technology. Areas for aroma active lactones are shown. N.d. = not detected.

| Compound | FED 2 | Twister |
|---|---|---|
| BUTYROLACTONE, GAMMA- | 2227073 | n.d. |
| OCTALACTONE, GAMMA- | 258962 | n.d. |
| DECALACTONE, GAMMA- | 466132 | 243536 |
| DODECALACTONE, GAMMA- | 6370465 | 995890 |
| DODECALACTONE, DELTA- | 13815623 | 1163321 |
| TETRADECALACTONE, DELTA- | 5243981 | 353889 |
| HEXADECALACTONE, DELTA- | 517924 | n.d. |

Table 2 demonstrates the improved performance of the solid phase extraction body according to the present invention (FED 2) compared to Twister® technology with special regard to the extraction of organic acids from milk. It can be seen that the whole range of organic acids ranging from acetic acid to hexanoic acid and even up to fatty acids like oleic acid are being extracted.

Table 2: Milk sample: Area comparison of two types of solid phase extraction bodies according to the present invention (FED 1 and FED 2) with Twister® technology. Areas for aroma active organic acids are shown. N.d. = not detected.

| Compound | FED 1 | FED 2 | Twister |
|---|---|---|---|
| ACETIC ACID | 18286658 | 45007596 | 813238 |
| FORMIC ACID | 8500480 | 5218084 | n.d. |
| BUTYRIC ACID | 20868678 | 17570572 | 1021983 |
| DODECANOIC ACID | 68609499 | 99117706 | 203853 |
| OLEIC ACID | 66877526 | 9736971 | n.d. |

4. Flavor extraction from apple juice

Apple juice sample preparation (commercial sample, purchased in a local super market) is done according to the analytical protocol laid out in Example 3. Table 3 demonstrates a good adsorption of volatile esters from the juice in comparison to Twister® technology. Table 4 shows areas from one type of the flavor extracting device (FED 2) in comparison to the Twister® and demonstrates good extraction of acids.

Table 3: Apple juice sample: Area comparison of esters in apple juice isolated with solid phase extraction bodies according to the present invention (FED 2) and Twister®. or solid phase extraction bodies not according to the present invention (FED1) N.d. = not detected.

| Compound | FED 1 | FED 2 | Twister |
|---|---|---|---|
| PROPIONIC ACID ETHYLESTER | 8315795 | 4216924 | 202160 |
| BUTYRIC ACID METHYLESTER | 1139150 | 299563 | n.d. |
| HEXANOIC ACID ETHYLESTER | 7803178 | 3133889 | 3228237 |
| HEXADECANIOC ACID ISOPROPYLESTER | 3987025 | 2327373 | 1042386 |
| OCTENOIC ACID HEXYLESTER 3-HYDROXY-5Z- | 8372753 | 6797774 | 2002644 |

Table 4: Apple sample: Area comparison of acids in apple juice isolated with one type of solid phase extraction body according to the present invention (FED 2) and Twister®. N.d. = not detected.

| Compound | FED 2 | Twister |
|---|---|---|
| ACETIC ACID | 46340076 | 50540 |
| FORMIC ACID | 7396899 | n.d. |
| DECANOIC ACID | 5346046 | n.d. |
| MYRISTIC ACID | 3133889 | n.d. |
| OLEIC ACID | 44243136 | 423272 |

Again, the solid phase extraction body of the present invention has shown superior extraction properties in the extraction of volatile aroma substances from a complex food matrix.

5. Stability testing

The solid phase extraction bodies according to the present invention have been reused 10 times in order to prove the stability of the extraction properties over time. Identical gas chromatograms have been obtained (results not shown) from a standard compound mixture such as that used in Example 8 for reproducibility measurements.

6. Flavor extraction from chocolate

Chocolate flavor determination is a huge analytical challenge due to the nature of chocolate. Chocolate has a high fat as well as sugar content. In principle, two ways to transform chocolate into a liquid sample exist.

A) Transformation of chocolate into a liquid phase by melting and addition of water to lower the solid content:

100g of chocolate was molten in a beaker at 85°C and mixed with 100 ml of 55°C warm water. The internal standard of 2-nonanol were added and the sample was stirred for 5 min. 20 ml of the emulsion are transferred into a vial and the solid phase extraction body FED1 or Twister was brought into contact with the liquid phase. After 60 min stirring time, the respective solid phase extraction body was rinsed with water and cleaned with a piece of tissue. Afterwards, the solid phase extraction body was analyzed in a commercial GC inlet as described in Example 3. The Twister® was treated equally.

B) Transformation of aroma content of chocolate into an aqueous solution and removal of fat and solids by centrifugation
100g of chocolate were molten at 85°C and mixed with 200ml of 55°C warm water and added internal standard of 2-nonanol. A centrifugation at 5°C separated the aqueous phase (middle phase) from the fat phase (upper phase) and cocoa solids (lower phase). 20 ml of the aqueous phase was transferred into a vial and a solid phase extraction body (FED2 or Twister) is brought into contact with the liquid phase. After 60 min stirring time, the solid phase extraction body was rinsed with water and cleaned with a piece of tissue. Afterwards, the solid phase extraction body was analyzed in a commercial GC inlet as described in Example 3. The Twister® was treated equally.

Flavor compounds in chocolate are described by P. Pfnür (P. Pfnür, Ph.D. thesis, Technical University Munich, Munich, 1998). The following list of compounds was analyzed in the chocolate flavor extracts A) and B):

Table 5: List of relevant flavor compounds in chocolate

| |
|---|
| BUTANAL, 2-METHYL- |
| BUTANAL, 3-METHYL- |
| BUTANDIONE, 2,3- |
| PHENYLACETALDEHYDE |
| PHENYLETHYLALCOHOL, 2- |
| DECALACTON, DELTA- |

(continued)

| |
|---|
| BUTYRIC ACID, 3-METHYL- |
| BUTYRIC ACID, 2-METHYL- |

Sample work-ups A) and B) were applied to a commercial milk chocolate sample. Altogether, roughly 300 volatile compounds were detected in the GC analysis. Comparative data for the two different sample work-ups have been obtained. Sample work-up A) seems better suited to fulfil the requirements of a comprehensive flavor extraction. The remaining fat content in the emulsion of sample work-up A) does neither interfere with the extraction of the flavor molecules nor with the GC analysis. This example clearly proves the tolerance of the fat extracting device toward fat content in the matrix. Table 6 shows a comparison of peak areas for the compounds listed in Table 5 with sample work-up procedure A).

Table 6: Chocolate sample sample work-up A). Comparison of peak areas for solid phase extraction bodies not according to the present invention (FED1) and Twister® stir bar. N.d. = not detected.

| Compound | FED 1 | Twister |
|---|---|---|
| BUTANAL, 2-METHYL- | 16416229 | 1437118 |
| BUTANAL, 2-METHYL- | 36523225 | 4804363 |
| BUTANDIONE, 2,3- | 1960721 | n.d. |
| PHENYLACETALDEHYDE | 7496873 | 346338 |
| PHENYLETHYLALCOHOL, 2- | 23067300 | 370989 |
| DECALACTON, DELTA- | 10034276 | 4890639 |
| BUTYRIC ACID, 3-METHYL- | 5343925 | n.d. |
| BUTYRIC ACID, 2-METHYL- | 3575432 | n.d. |

Results from sample work-up procedure B) which results in a relatively complete removal of the fat from the matrix are shown in Table 7 and prove that the solid phase extraction bodies are tolerant to the matrix composition and extract flavor compounds in the presence or absence of fat..

Table 7: Chocolate sample sample work-up B). Comparison of peak areas for solid phase extraction bodies according to the present invention (FED2) and Twister® stir bar. N.d. = not detected.

| | FED 2 | Twister |
|---|---|---|
| BUTANAL, 2-METHYL- | 5923337 | 1057063 |
| BUTANAL 3-METHYL- | 11786538 | 4444091 |
| BUTANDIONE 2,3- | 8028076 | n.d |
| PHENYLACETALDEHYDE | 150339 | n.d. |
| PHENYLETHYLALCOHOL, 2- | 6833134 | 629533 |
| DECALACTON, DELTA- | 5983472 | 3431303 |
| BUTYRIC ACID 3-METHYL- | 3999004 | n.d. |
| BUTYRIC ACID 2-METHYL- | 1322979 | n.d. |

7. Culinary preparation beef

Roasted beef culinary preparation is another good example for a matrix which involves some analytical difficulties due to its high fat content. The amount of liquid flavor material is rather small and therefore any technique must be sensitive enough to allow detection of minor compounds. Also, the aroma compounds are tightly bound to the fat matrix of the beef preparation. Alternatives found in the literature rely on headspace sampling techniques (J. Agric. Food Chem. 2005, 53, 9578-9585). Disadvantages of headspace sampling techniques have already been discussed before.

Beef steak was pan fried in hot vegetable oil for approx. 5-7 min ("medium"). After cooling, the meat was cut in small pieces and pressed with a commercial tincture press (Fischer GmbH, Neuss, Germany) at 40 bar. 7 steaks yielded ca. 20g of juice. 20g of this juice was transferred into a vial and the solid phase extraction bodies (FED1, FED2 or Twister), respectively, were brought into contact with the liquid phase. After 60 min stirring time, the respective solid phase extraction body was rinsed with water and cleaned with a piece of tissue. Afterwards, the solid phase extraction body was analyzed in a commercial GC inlet as described in Example 3. The Twister® was treated equally.

The literature describes carbonyl flavor compounds as key compounds for the flavor of beef (J. Agric. Food Chem. 2005, 53, 9578-9585). Table 8 shows the carbonyl compounds identified with the solid phase extraction bodies FED1 and FED2 and the Twister® bar. The increased loading capacity of the solid phase extraction bodies compared to the Twister® bar is again demonstrated in this example.

Table 8. Beef sample: Area comparison of ketones in roasted beef isolated with solid phase extraction bodies according to the present invention ( FED 2) and Twister® bar or solid phase extraction bodies not according to the present invention (FED 1).

| Compound | FED 1 | FED 2 | Twister |
|---|---|---|---|
| OCTANDION 2,3- | 6797440 | 6364656 | 324377 |
| FURANON, 2(5H)- | 5831584 | 4552935 | 589776 |
| PENTADECANON, 2- | 1676580 | 1118541 | 437417 |
| BUTANON, 2- | 346250 | 456869 | n.d. |
| BUTANDION, 2,3- | 838290 | 94525 | n.d. |
| PENTANDION, 2,3- | 2113949 | 110279 | n.d. |
| HEPTANON, 2- | 564935 | 441115 | n.d. |
| NONANON, 2- | 200461 | 535639 | n.d. |
| OCTADIEN-2-ON, 3E,5E- | 1804146 | 1591164 | n.d. |

8. Reproducibility between measurements

A five fold measurement of a set of representative flavor compounds showed that the variation coefficient is in the range of 3 - 18 % depending on compound type and concentration (cf. Table 9). For the measurement, an aqueous solution of the compounds was extracted with the solid phase extraction body (FED 1) and measured in the gas chromatograph with MS detection as outlined in the previous examples. Concentrations in parts per million (ppm) were determined using 2-Nonanol (with a concentration of 1 ppm) as internal standard which has been added to the compound solution prior to extraction.

Table 9: Reproducibility data

| Compound | [ppm] | [ppm] | [ppm] | [ppm] | [ppm] | mean | std deviation | CV [%] |
|---|---|---|---|---|---|---|---|---|
| BUTYRIC ACID ETHYLESTER | 0,349 | 0,399 | 0,395 | 0,446 | 0,333 | 0,385 | 0,0403 | 10,5 |
| LIMONENE | 3,03 | 2,53 | 3,43 | 2,57 | 2,87 | 2,89 | 0,329 | 11,4 |
| HEXANOIC ACID ETHYLESTER | 1,80 | 1,77 | 2,00 | 1,84 | 1,80 | 1,84 | 0,0800 | 4,3 |
| HEXENOL 3Z- | 0,183 | 0,193 | 0,144 | 0,189 | 0,157 | 0,173 | 0,0193 | 11,2 |
| CYCLOPENTENONE,2-HYDROXY-3-METHYL-2- | 0,0060 | 0,0100 | 0,0072 | 0,0089 | 0,0076 | 0,0079 | 0,0014 | 17,6 |
| CINNAMIC ALDEHYDE | 0,545 | 0,601 | 0,569 | 0,577 | 0,558 | 0,570 | 0,0191 | 3,3 |
| THIAZOLE, 4-METHYL-5-(2-HYDROXYETHYL)- | 0,027 | 0,028 | 0,021 | 0,033 | 0,025 | 0,027 | 0,0041 | 15,3 |
| DODECALACTONE, GAMMA- | 2,88 | 2,35 | 3,37 | 2,54 | 2,57 | 2,74 | 0,356 | 13,0 |
| COUMARIN | 0,220 | 0,253 | 0,223 | 0,240 | 0,215 | 0,23 | 0,0140 | 6,1 |
| BENZALDEHYDE 3-ETHOXY-4-HYDROXY- | 0,184 | 0,191 | 0,169 | 0,175 | 0,166 | 0,18 | 0,0091 | 5,2 |
| VANILLIN | 0,058 | 0,062 | 0,055 | 0,057 | 0,051 | 0,056 | 0,0037 | 6,6 |
| Sum | 9,28 | 8,39 | 10,38 | 8,67 | 8,76 | 9,10 | 0,88 | 9,5 |

9. Flavor extraction with FED 3

A solution of the compounds listed in Table 10 in water was used to evaluate the performance of the FED 3 in comparison to the Twister® bar. The compounds were dissolved at a concentration of 2000 ppm in ethanol and finally diluted to a concentration of 1ppm in water. It can be deducted from Table 10 that the extraction properties of FED 3 are superior and higher extraction yields can be achieved.

Table 10: Area comparison of flavor molecules extracted from an aqueous test solution with FED 3 and Twister®. Concentrations of the compounds are around 1 ppm in water.

| Compound | FED 3 | Twister |
|---|---|---|
| BUTYRIC ACID ETHYLESTER | 69572178 | 27568076 |
| PROPIONIC ACID ETHYLESTER, 3-METHYLTHIO- | 25721165 | 4723022 |
| OCTALACTON, GAMMA- | 80668896 | 9582944 |
| DECALACION, CAMMA- | 184982509 | 122131199 |
| DECALACTON, DELTA- | 49611483 | 6417150 |
| CUMARIN 3,4-DIHYDRO- | 83035601 | 2566860 |
| CUMARIN | 81361046 | 7666355 |
| BENZALDEHYDE, 3-ETHOXY-4-HYDROXY- | 55148678 | 2481298 |
| VANILLIN | 34272559 | 941182 |
| HEXENOL, 3Z- | 35455911 | n.d. |
| BUTYRIC ACID ETHYLESTE | 22148781 | n.d. |
| HEXANOIC ACID | 160824262 | n.d. |
| PYRON, 2-ETHYL-3-HYDROXY-4- | 14177899 | n.d. |
| THIAZOL, 4-METHYL-5-(2-HYDROXYETHYL)- | 12748945 | n.d. |
| 3-PHENYL PROPIONIC ACID ETHYLESTER, O-HYDROXY- | 9712419 | n.d. |
| BUTANON, 4-(4-HYDROXYPHENYL)-2- | 11498611 | n.d. |

10. Comparison of flavor extraction

Recovery rates are a good measure to compare the extraction efficiency of various techniques. Absolute recovery rates are determined by GC analysis of a liquid sample with a sample concentration of 0.1ppm in a volatile solvent such as ether. This solution is directly introduced into the TDS tube of a TDS sampling unit linked to a GC instrument. The recorded peak areas obtained by this methodology are set to 100%. Relative to this ratio, the extraction techniques are tested with 0.1ppm of the compounds in either water or vegetable oil. The FED 2 device, as well as the Twister technology is used to extract the flavor compounds from the aqueous or oily matrix. The peak areas obtained in this extraction are calculated relative to the direct injection and calculated as % recovery compared to the 100% recovery of a direct injection into the TDS tube.

In addition, the results are compared to SAFE. SAFE (solvent assisted flavor extraction) [e.g. cf. Journal of Food Composition and Analysis 22, 6, 2009, pp. 606-612 is a technique nowadays employed on a routine basis in the analytical flavor laboratory. The SAFE extraction device is considered as a gentle extraction technique which allows the recovery of the full aroma spectrum.

We have compared FED 2, Twister and SAFE for both water and oil samples spiked with 0.1 ppm of the flavor compound mixture listed in Table 11. The recovery rates are also shown in Table 11.

It can be seen that for all polar compounds which are defined by the difference in retention index in gas chromatography on DB Wax columns and DB-1 columns > 600 the recovery rates are superior for the FED 2 in comparison to both Twister and SAFE. This is valid for the extraction from pure vegetable oil. The FED 2 are therefore extremely suitable for the extraction of polar compounds from fat-containing matrices and show increased sensitivity and selectivity for the extraction of compounds with a delta RI on polar and unpolar GC compounds > 600.

Table 11: Recovery rates obtained by comparison of extraction with SAFE, Twister and FED 2 related to direct injection based on 0.1 ppm of all compounds in either solvent (for the direct measurement in the TDS tube) and water or oil for the extraction with SAFE, Twister and FED 2. Peak areas used for the calculation of relative recovery rates are not shown.

| | | SAFE | SAFE | Twister | Twister | FED 2 | FED 2 |
|---|---|---|---|---|---|---|---|
| | Delta RI DB WAX DB 1 | **water** | **oil** | **water** | **oil** | **water** | **oil** |
| **ETHYLBUTYRAT** | 253 | 30,6 | 52,3 | 2,6 | 0,0 | 16,8 | 0,7 |
| **PINEN BETA** | 138 | n.d. | 44,5 | 18,3 | n.d. | 20,2 | n.d. |
| **LIMONEN** | 180 | n.d. | 41,8 | 17,5 | 0,0 | 31,6 | 0,4 |
| **HEXANALDIETHYLACETAL** | n.d. | 30,7 | 20,6 | 12,3 | 0,0 | 9,0 | 0,0 |
| **FILBERTONE** | 336 | 53,1 | 34,4 | 4,2 | 0,0 | 13,8 | 0,3 |
| **DIMETHYLPYRAZIN-2,3** | 445 | 66,0 | 36,1 | 0,2 | n.d. | 1,9 | 0,5 |
| **LINALOOL** | 465 | 67,1 | 12,0 | 2,8 | 0,0 | 11,9 | 0,2 |
| **GERANIOL** | 604 | 72,4 | 0,0 | 4,2 | 0,0 | 11,8 | **0,5** |
| **DECALACTON, GAMMA-** | 729 | 77,5 | 0,0 | 6,9 | 0,0 | 17,9 | **0,4** |
| **METHYLCYCLOPENTENOLON-3,2,2** | 826 | 58,6 | 0,0 | 0,0 | 0,0 | 0,6 | **0,7** |
| **CAPROIC ACID** | 874 | n.d. | n.d. | 10,8 | 0,0 | 20,8 | **9,4** |
| **HELIOTROPIN** | 928 | 132,4 | 0,0 | 1,5 | n.d. | 7,0 | **0,5** |
| **LAURIC ACID** | 931 | n.d. | n.d. | 2,6 | 0,0 | 38,7 | **0,7** |
| **FURANEOL** | 995 | n.d. | n.d. | 0,0 | 0,0 | 0,5 | **0,2** |
| **SULFUROL** | 1068 | 31,1 | 0,0 | 0,1 | 0,0 | 0,8 | **0,5** |
| **CUMARIN** | 1052 | 73,1 | 0,0 | 0,7 | 0,0 | 7,1 | **0,5** |
| **VANILLIN** | 1184 | 86,2 | 0,0 | 0,1 | 0,0 | 0,9 | **0,3** |
| **ACETIC ACID** | 1437 | n.d. | n.d. | 0,7 | 0,1 | 6,5 | **7,5** |

## Claims

**1.** Method of producing a solid phase extraction body, comprising the steps:

a) forming a mixture comprising

(i) bringing an aromatic polyether into solution in a solvent, the aromatic polyether being Poly(oxy[1,1':3',1"-terphenyl]-2',5'-diyl)-, and
(ii) suspending a resin in said solvent before, during or after step (a)-(i), wherein the resin is of the formula

$$-(A)_n-(B)_m-(C)_p-$$

and salts thereof, wherein the order of (A), (B) and (C) may be random, block, or a combination of random and block; wherein

$$\frac{1}{100} < \frac{(p+n)}{m} < \frac{100}{1}$$

and

$$\frac{1}{500} < \frac{p}{n} < \frac{100}{1}$$

wherein (A) is selected from the group consisting of

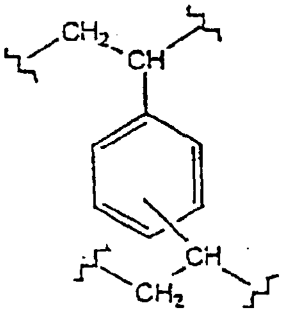
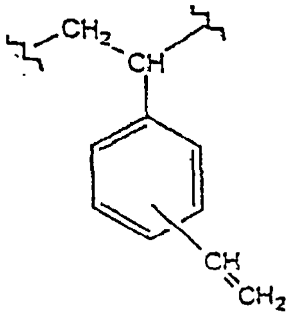
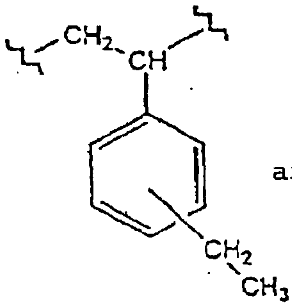
and
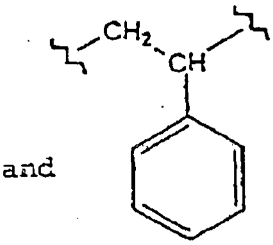

wherein (B) is selected from the group consisting of

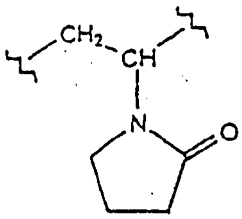
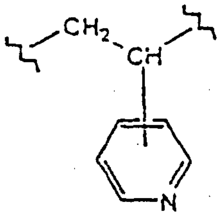
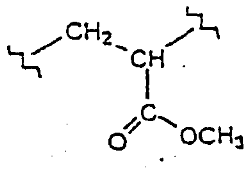
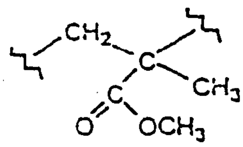

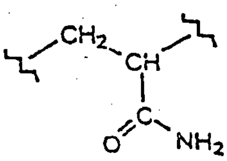
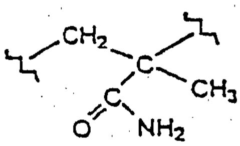
and
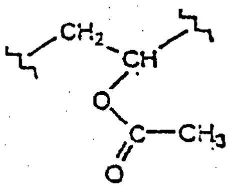

and wherein C is modified A, wherein modified A is selected from the group consisting of

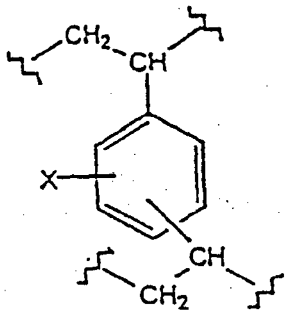
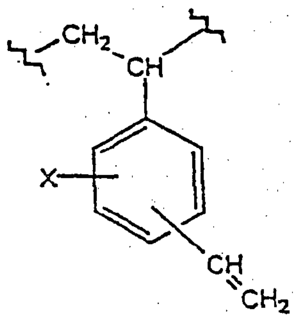
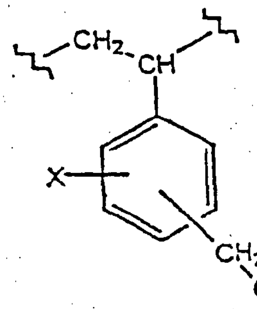
and
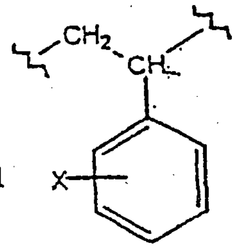

and wherein wherein X is selected from the group consisting of $SO_3H$, $CH_2CO_2H$, $CH_2CH(CO_2H)_2$, $CO_2H$, $PO_3H_2$, $PO_2H_2$, $CH_2PO_3H_2$, $CH_2Cl$, $CH_2NH_2$; $CH_2N(CH_2)_yCH_3]_2$ wherein y is any integer from 0 to 18, $CH_2N^+(CH_2)_y{=}CH_3]_3D^-$ wherein y= is any integer from 0 to 18 and D is an anion, $SO_2NHR$ wherein R is polyethylenimine, and $CH_2NHR$ wherein R is polyethylenimine,

b) forming a solid phase extraction body using the mixture of step a), by coating and drying a carrier body with the mixture to form a solid phase extraction layer on the carrier body.

**2.** Method according to any of the preceding claims, wherein the solvent is selected from the group consisting of chloroform and dichloromethane.

**3.** Method according to any of the preceding claims, wherein the resin is a copolymer of divinylbenzene and N-vinylpyrrolidone further comprising modified A.

**4.** Method according to any of the preceding claims, the carrier body used in step (b) has a roughness as of glass sand-blasted with corundum of 60 to 120 μm particle size at a blasting pressure of 3 bar and an angle of impact of 45°.

**5.** Method according to any of the preceding claims, wherein the solid phase extraction layer has an average thickness of at least 5 μm, preferably in the range of 5 to 500 μm.

**6.** Method according to claim 3 comprising the step of
subjecting said copolymer to a sulfonation reaction so as to form a sulfonated copolymer comprising at least one ion-exchange functional group, at least one hydrophilic component and at least one hydrophobic component.

**7.** Solid phase extraction body, obtainable by a method according to any of the preceding claims.

**8.** Solid phase extraction body according to claim 7, comprising a magnetic carrier body.

**9.** Solid phase extraction method, comprising the step of contacting a medium comprising an analyte with a solid phase extraction body according to claim 7 or 8 to allow sorption of the analyte to said solid phase extraction body.

**10.** Method for analytically determining the presence of and/or the isolation of an analyte, preferably a flavor or fragrance substance, in a medium, comprising the steps of

a) contacting a medium comprising the analyte with a solid phase extraction body according to claim 7 or 8 to allow sorption of the analyte to said solid phase extraction body,

b) desorbing the analyte from said solid phase extraction body,

c) detecting or recovering the desorbed analyte.

**11.** Method according to claim 10, wherein the desorption is effected by thermal desorption, and/or wherein the separation and detection is performed quantitatively and/or qualitatively, preferably by liquid or gas chromatography, and preferably with detection techniques selected from mass spectrometry, UV-Vis spectroscopy, flame ionization detection.

**12.** Method according to any of claims 10 to 11, wherein the medium is selected from the group consisting of flavour and/or fragrance mixtures, preferably foods, food extracts, preferably beverages, culinary preparations, soy, fat-containing foods or food extracts, fruit products, candies, chewing gum, toothpastes, flavors, perfumes, botanical

extracts, carbonated and non-carbonated beverages, with or without alcohol, fat-containing foods or food extracts, cloudy foods, extracts of any kind, biological samples, synthesis products, intermediate products from production plants.

## Patentansprüche

1. Verfahren zur Herstellung eines Festphasen-Extraktionskörpers, umfassend die Schritte:

a) Bilden einer Mischung umfassend

(i) in Lösung bringen eines aromatischen Polyethers in einem Lösungsmittel, wobei der aromatische Polyether Poly(oxy[1,1':3',1"-terphenyl]-2',5'-diyl)- ist, und
(ii) Suspendieren eines Harzes in dem besagten Lösungsmittel vor, während oder nach Schritt (a)-(i), wobei das Harz die Formel

$$-(A)_n-(B)_m-(C)_p-$$

und Salzen davon hat, wobei die Abfolge von (A), (B) und (C) ungeordnet oder im Block oder eine Kombination aus ungeordnet und im Block sein kann; wobei

$$\frac{1}{100} < \frac{(p+n)}{m} < \frac{100}{1}$$

und

$$\frac{1}{500} < \frac{p}{n} < \frac{100}{1}$$

wobei (A) ausgewählt ist aus der Gruppe bestehend aus

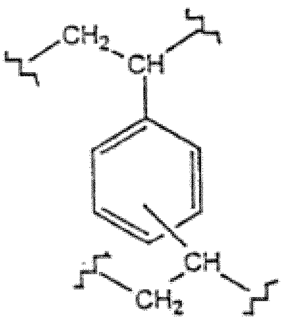
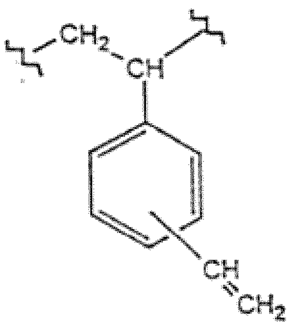
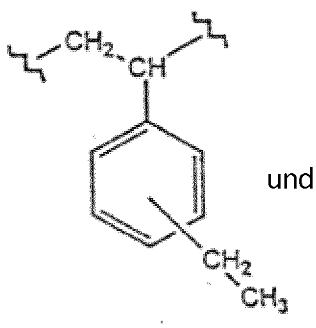
und
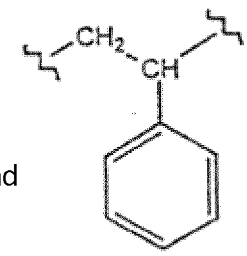

wobei (B) ausgewählt ist aus der Gruppe bestehend aus

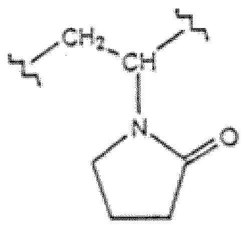 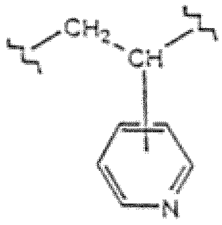 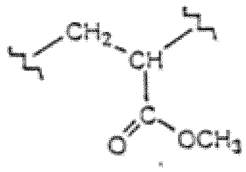 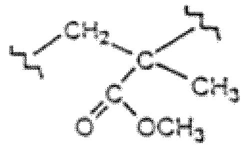

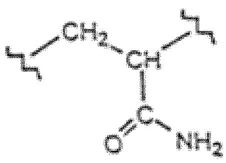 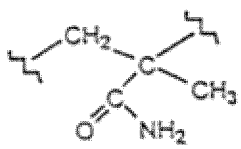 und 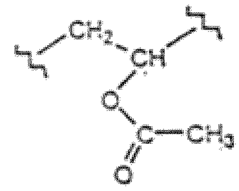

und wobei C modifiziertes A ist, wobei modifiziertes A ausgewählt ist aus der Gruppe bestehend aus

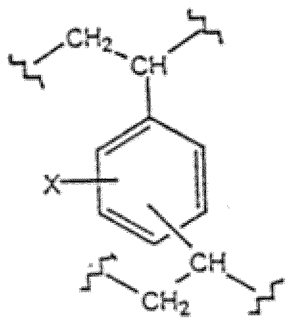 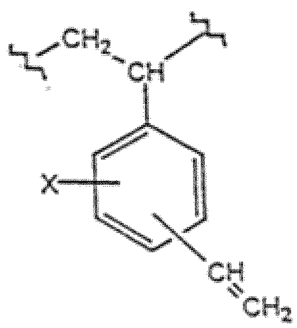 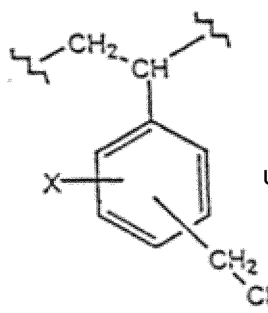 und 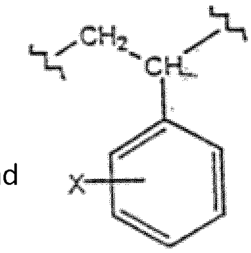

und wobei X ausgewählt ist aus der Gruppe bestehend aus $SO_3H$, $CH_2CO_2H$, $CH_2CH(CO_2H)_2$, $CO_2H$, $PO_3H_2$, $PO_2H_2$, $CH_2PO_3H_2$, $CH_2Cl$, $CH_2NH_2$, $CH_2N[(CH_2)_yCH_3]_2$ wobei y eine Ganzzahl von 0 bis 18 ist, $CH_2N^+[(CH_2)_y{=}CH_3]_3D^-$ wobei y = eine Ganzzahl von 0 bis 18 und D ein Anion ist, $SO_2NHR$ wobei R Polyethylenimin ist, und $CH_2NHR$ wobei R Polyethylenimin ist,

b) Bilden eines Festphasen-Extraktionskörpers unter Verwendung der Mischung aus Schritt a), durch Beschichten und Trocknen eines Trägerkörpers mit der Mischung, um eine Festphasen-Extraktionsschicht auf dem Trägerkörper zu bilden.

**2.** Verfahren nach einem der vorhergehenden Ansprüche, wobei das Lösungsmittel ausgewählt ist aus der Gruppe bestehend aus Chloroform und Dichlormethan.

**3.** Verfahren nach einem der vorhergehenden Ansprüche, wobei das Harz ein Copolymer von Divinylbenzol und N-Vinylpyrrolidon ist, weiterhin umfassend modifiziertes A.

**4.** Verfahren nach einem der vorhergehenden Ansprüche, wobei der in Schritt (b) verwendete Trägerkörper eine Rauheit von mit einem Korund einer Partikelgröße von 60 bis 120 μm bei einem Strahlungsdruck von 3 bar und einem Einstrahlungswinkel von 45° sandgestrahltem Glas aufweist.

**5.** Verfahren nach einem der vorhergehenden Ansprüche, wobei die Festphasen-Extraktionsschicht eine durchschnittliche Dicke von wenigstens 5 μm, vorzugsweise im Bereich von 5 bis 500 μm aufweist.

**6.** Verfahren nach Anspruch 3, umfassend den Schritt

Unterziehen des besagten Copolymers einer Sulfonierungsreaktion, um ein sulfoniertes Copolymer umfassend wenigstens eine Ionen-austauschende funktionelle Gruppe, wenigstens eine hydrophile Komponente und wenigstens eine hydrophobe Komponente zu bilden.

**7.** Festphasen-Extraktionskörper, erhältlich durch ein Verfahren nach einem der vorhergehenden Ansprüche.

**8.** Festphasen-Extraktionskörper nach Anspruch 7, umfassend einen magnetischen Trägerkörper.

**9.** Festphasen-Extraktionsverfahren, umfassend den Schritt des Kontaktierens eines Mediums umfassend einen Analyten mit einem Festphasen-Extraktionskörper nach Anspruch 7 oder 8, um die Sorption des Analyten an den besagten Festphasen-Extraktionskörper zuzulassen.

**10.** Verfahren zur analytischen Bestimmung der Anwesenheit von und/oder zur Isolation eines Analyten, vorzugsweise eines Geschmacks- oder Duftstoffes, in einem Medium, umfassend die Schritte

a) Kontaktieren eines Mediums umfassend den Analyten mit einem Festphasen-Extraktionskörper nach Anspruch 7 oder 8, um die Sorption des Analyten an den besagten Festphasen-Extraktionskörper zuzulassen,
b) Desorbieren des Analyten von dem besagten Festphasen-Extraktionskörper,
c) Nachweisen oder Rückgewinnen des desorbierten Analyten.

**11.** Verfahren nach Anspruch 10, wobei die Desorption durch thermische Desorption erfolgt, und/oder wobei die Trennung und der Nachweis quantitativ und/oder qualitativ durchgeführt wird, vorzugsweise durch Flüssig- oder Gaschromatographie, und vorzugsweise mit Nachweistechniken ausgewählt aus Massenspektrometrie, UV-Vis-Spektroskopie, Flammenionisationsdetektion.

**12.** Verfahren nach einem der Ansprüche 10 bis 11, wobei das Medium ausgewählt ist aus der Gruppe bestehend aus Geschmack- und/oder Duftstoff-Mischungen, vorzugsweise Nahrungsmittel, Nahrungsmittelextrakte, vorzugsweise Getränke, kulinarische Zubereitungen, Soja, fetthaltige Nahrungsmittel oder Nahrungsmittelextrakte, Fruchtprodukte, Süßigkeiten, Kaugummi, Zahnpasta, Geschmacksstoffe, Parfüms, botanische Extrakte, kohlensäurehaltige und nicht-kohlensäurehaltige Getränke, mit oder ohne Alkohol, fetthaltige Nahrungsmittel oder Nahrungsmittelextrakte, trübe Nahrungsmittel, Extrakte jeglicher Art, biologische Proben, Syntheseprodukte, intermediäre Produkte aus Fertigungsanlagen.

## Revendications

**1.** Procédé de production d'un corps d'extraction en phase solide, comprenant les étapes consistant à:

a) former un mélange comprenant

(i) la mise en solution d'un polyéther aromatique dans un solvant, ledit polyéther aromatique étant poly(oxy[1,1':3',1"-terphényle]-2',5'-diyle)-, et
(ii) la mise en suspension d'une résine dans ledit solvant avant, durant ou après l'étape (a)-(i), la résine étant de formule

$$-(A)_n-(B)_m-(C)_p-$$

et de sels de ceux-ci, l'ordre de (A), (B) et (C) pouvant être aléatoire, en bloc ou être une combinaison d'aléatoire et d'en bloc ; où

$$\frac{1}{100} < \frac{(p+n)}{m} < \frac{100}{1}$$

et

$$\frac{1}{500} < \frac{p}{n} < \frac{100}{1}$$

dans laquelle (A) est choisi dans le groupe constitué par

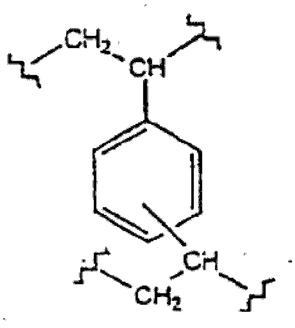
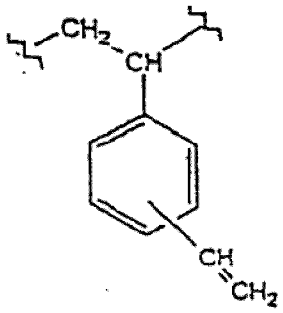
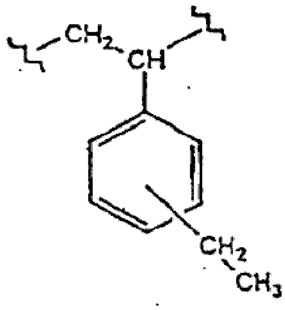
et
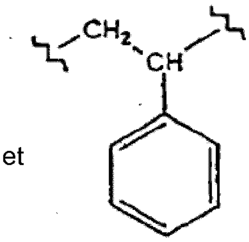

dans laquelle (B) est choisi dans le groupe constitué par

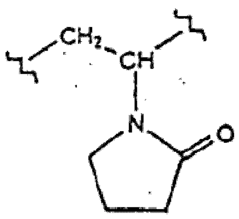
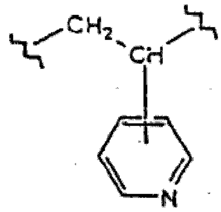
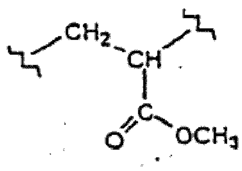
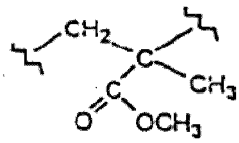

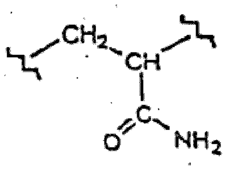
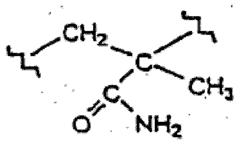
et
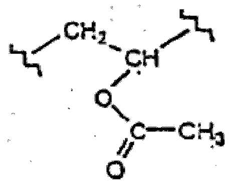

et dans laquelle C est de A modifié, A modifié étant choisi dans le groupe constitué par

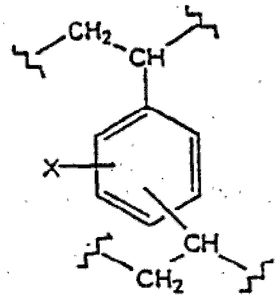
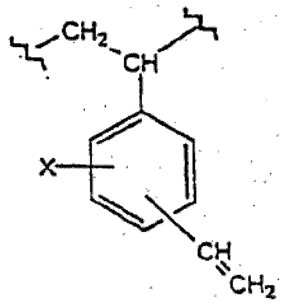
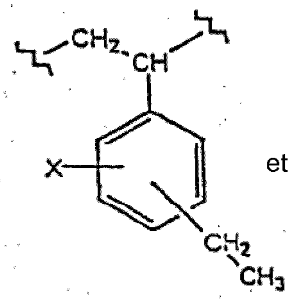
et
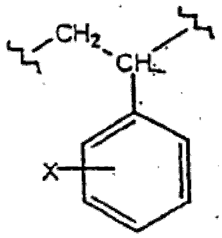

et X étant choisi dans le groupe constitué par $SO_3H$, $CH_2CO_2H$, $CH_2CH(CO_2H)_2$, $CO_2H$, $PO_3H_2$, $PO_2H_2$, $CH_2PO_3H_2$, $CH_2Cl$, $CH_2NH_2$, $CH_2N[(CH_2)_yCH_3]_2$, où y est un nombre entier compris entre 0 et 18, $CH_2N^+[(CH_2)_y{=}CH_3]_3D^-$, où y = un nombre entier compris entre 0 et 18 et D est un anion, $SO_2NH$, où R est la polyéthylèneimine, et $CH_2NHR$, où R est la polyéthylèneimine,

b) former un corps d'extraction en phase solide en utilisant le mélange de l'étape a), en revêtant et en séchant un corps porteur avec le mélange de manière à former une couche d'extraction en phase solide sur ledit corps porteur.

**2.** Procédé selon l'une quelconque des revendications précédentes, dans lequel ledit solvant est choisi dans le groupe constitué par le chloroforme et le dichlorométhane.

**3.** Procédé selon l'une quelconque des revendications précédentes, dans lequel ladite résine est un copolymère de divinylbenzène et de N-vinylpyrrolidone, comprenant en outre de A modifié.

**4.** Procédé selon l'une quelconque des revendications précédentes, dans lequel ledit corps porteur mis en oeuvre dans l'étape (b) présente une rugosité d'un verre sablé au corindon ayant une taille des particules comprise entre 60 et 120 μm, à une pression de projection de 3 bars et sous un angle d'impact de 45°.

**5.** Procédé selon l'une quelconque des revendications précédentes, dans lequel ladite couche d'extraction en phase solide présente une épaisseur moyenne d'au moins 5 μm, de préférence comprise entre 5 et 500 μm.

**6.** Procédé selon la revendication 3, comprenant l'étape consistant à :

soumettre ledit copolymère à une réaction de sulfonation afin de former un copolymère sulfoné comprenant au moins un groupe fonctionnel d'échange d'ions, au moins un composant hydrophile et au moins un composant hydrophobe.

**7.** Corps d'extraction en phase solide apte à être obtenu au moyen d'un procédé selon l'une quelconque des revendications précédentes.

**8.** Corps d'extraction en phase solide selon la revendication 7, comprenant un corps porteur magnétique.

**9.** Procédé d'extraction en phase solide, comprenant l'étape consistant à mettre en contact un milieu comprenant un analyte avec un corps d'extraction en phase solide selon la revendication 7 ou 8, afin de permettre la sorption de l'analyte sur ledit corps d'extraction en phase solide.

**10.** Procédé de détermination analytique de la présence de et/ou d'isolation d'un analyte, de préférence d'une substance aromatisante ou odorante, dans un milieu, comprenant les étapes :

a) la mise en contact d'un milieu comprenant ledit analyte, avec un corps d'extraction en phase solide selon la revendication 7 ou 8, afin de permettre la sorption de l'analyte sur ledit corps d'extraction en phase solide,
b) la désorption de l'analyte dudit corps d'extraction en phase solide,
c) la mise en évidence ou la récupération de l'analyte désorbé.

**11.** Procédé selon la revendication 10, dans lequel la désorption est réalisée par désorption thermique et/ou dans lequel la séparation et la mise en évidence est réalisée quantitativement et/ou qualitativement, de préférence par chromatographie en phase liquide ou en phase gazeuse, et de préférence avec des techniques de mise en évidence choisies dans la spectrométrie de masse, la spectroscopie ultraviolet-visible, la détection à ionisation de flamme.

**12.** Procédé selon l'une quelconque des revendications 10 à 11, dans lequel ledit milieu est choisi dans le groupe constitué par des mélanges de substances aromatisantes et/ou odorantes, de préférence aliments, extraits d'aliment, de préférence boissons, préparations culinaires, soja, aliments ou extraits d'aliment contenant de la graisse, produits de fruit, friandises, gomme à mâcher, pâte dentifrice, substances aromatisantes, parfums, extraits botaniques, boissons gazeuses et non gazeuses, avec ou sans alcool, aliments ou extraits d'aliment contenant de la graisse, aliments troubles, extraits de toute sorte, échantillons biologiques, produits de synthèse, produits intermédiaires provenant d'installations de production.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9115745 A
- EP 1039288 A
- DE 102004006856 A1
- WO 9964480 A1
- US 20060247361 A
- US 5976367 A


### Non-patent literature cited in the description


- **BALTUSSEN, E. ; CRAMERS, C. A. ; SANDRA, P. J. F.** *Analytical and Bioanalytical Chemistry,* 2002, vol. 373 (1-2), 3-22
- **MONTERO, L. ; POPP, P. ; PASCHKE, A. ; PAWLISZYN, J.** *Journal of Chromatography, A,* 2004, vol. 1025 (1), 17-26
- **WANG, LILI ; HOSAKA, AKIHIKO ; WATANABE, CHUICHI ; OHTANI, HAJIME ; TSUGE, SHIN.** *Journal of Chromatography A,* 2004, vol. 1035 (2), 277-279
- **WANG, LILI ; ZHANG, XIAO ; WANG, YIPING ; WANG, WEI.** *Analytica Chimica Acta,* 2006, vol. 577 (1), 62-67
- Detection of volatile organic compounds by temperature-programmed desorption combined with mass spectrometry and Fourier transform infrared spectroscopy. **KETOLA R A.** ANALYTICA CHIMICA ACTA. ELSEVIER, 15 March 2006, vol. 562, 245-251
- **BELITZ ; GROSCH.** Lehrbuch der Lebensmittelchemie. Springer, 1992
- **P. PFNÜR.** *Ph.D. thesis, Technical University Munich,* 1998
- *J. Agric. Food Chem.,* 2005, vol. 53, 9578-9585
- *Journal of Food Composition and Analysis,* 2009, vol. 22 (6), 606-612